# EUROPÄISCHE PATENTSCHRIFT

(11) **EP 1 826 050 B1**
(45) Veröffentlichungstag und Bekanntmachung des Hinweises auf die Patenterteilung: **08.10.2008**
(21) Anmeldenummer: 06024479.5
(22) Anmeldetag: 25.11.2006
(51) Int. Cl.: B60J 10/04

(54) **Kraftfahrzeugtür**
Vehicle door
Portière de véhicule

(30) Priorität: 28.02.2006 DE 102006009523
(43) Veröffentlichungstag der Anmeldung: 29.08.2007
(73) Patentinhaber: Dr. Ing. h.c. F. Porsche Aktiengesellschaft, 70435 Stuttgart (DE)
(72) Erfinder: Rieder, Klaus, 71287 Weissach-Flacht (DE); Appel, Manfred, 75417 Mühlacker (DE); Keller, Karlheinz, 75179 Pforzheim (DE)

(56) Entgegenhaltungen:
- DE-A1- 3 816 347
- DE-A1- 10 038 200
- DE-A1- 19 639 280
- US-A- 5 267 415

## Beschreibung

Bei der Erfindung wird ausgegangen von einer Kraftfahrzeugtür gemäß Oberbegriff des Patentanspruchs 1.

Eine gattungsbildende Kraftfahrzeugtür ist aus der DE 100 38 200 A1 bekannt, die einen Türkörper aufweist, der aus einem Türinnenteil, das auch als Rahmen bezeichnet werden kann, und einem Türaußenblech zusammen gesetzt ist. Das Türaußenblech ist randseitig an dem Türinnenteil befestigt. Innerhalb des Türkörpers ist ein Fensterschacht ausgebildet, der nach oben hin mit einer Schachtöffnung versehen ist, so dass eine an der Tür bewegbar gehaltene Fensterscheibe in den Fensterschacht hinein abgesenkt und wieder angehoben werden kann. Der Fensterschacht ist im Bereich seiner Schachtöffnung mit einer Schachtverstärkung versehen, an der außerdem das Türaußenblech mit einem nach unten abgebogenen Flansch gehalten ist. Dafür weist die Schachtverstärkung zwei aufrechte Längsstege auf, die eine U-förmige Befestigungsnut bilden. Der Schachtöffnung ist überdies eine Fensterdichtung zugeordnet, die entweder zusammen mit dem Flansch in der Befestigungsnut oder in einer separaten Befestigungsnut (siehe Fig. 6 in der DE 100 38 200 A1) gehalten ist.

Die DE 38 16 347 A1 beschreibt für eine Kraftfahrzeugtür eine Schachtverstärkung, die eine von zwei aufrechten Stegen gebildete Befestigungsnut aufweist, in die ein nach unten abgebogener Flansch des Türaußenblechs eingesetzt und verklebt ist. Eine zweite Befestigungsnut nimmt die Fensterdichtung auf.

Die US 5 267 415 A beschreibt eine Kraftfahrzeugtür nach dem Oberbegriff des Anspruchs 1.

Es ist daher Aufgabe der Erfindung, eine Kraftfahrzeugtür anzugeben, bei der die Fensterdichtung und das Außenblech auf einfache Art und Weise an der Schachtverstärkung gehalten sind.

Gelöst wird diese Aufgabe mit einer Kraftfahrzeugtür, die die in Anspruch 1 genannten Merkmale zeigt. In den Unteransprüchen sind Ausgestaltungen der Erfindung angegeben.

Die mit der Erfindung hauptsächlich erzielten Vorteile sind darin zu sehen, dass auf eine separate Befestigungsnut für die Fensterdichtung bzw. das Türaußenblech verzichtet werden kann, weil der nach unten abgebogene Flansch des Türaußenblechs zusammen mit dem aufrechten Längssteg diese Aufnahme (Befestigungsnut) für die Fensterdichtung bildet. Durch das feste Verbinden des Endabschnitts des Flansches mit dem Längssteg wird außerdem ein stabiler Verbund mit der Schachtverstärkung geschaffen. Außerdem lässt sich die erfindungsgemäße Kraftfahrzeugtür einfacher herstellen.

Um die Einstecktiefe des Flansches bzw. der Fensterdichtung begrenzen zu können, ist gemäß Anspruch 2 in vorteilhafter Weise ein durch den Längssteg selbst gebildeter Nutgrund vorgesehen.

Nach einer in Anspruch 3 angegebenen Weiterbildung der Erfindung ist vorteilhaft, dass überschüssiger Klebstoff zwischen den beiden Längsstegen aufgefangen werden kann. Vorzugsweise wird ein Klebstoff verwendet, der erst unter Wärmeeinwirkung aushärtet bzw. erstarrt, was beispielsweise erfolgen kann, wenn eine mit der Kraftfahrzeugtür versehene Karosserie erwärmt wird, insbesondere bei der einer so genannten kathodischen Tauchlackierung (KTL) nachgeordneten Erwärmung.

Besonders vorteilhaft und sicher kann der vorstehend erwähnte Klebstoff aufgefangen werden, wenn der Längskanal eine entsprechende Breite aufweist, wie dies in Anspruch 4 angegeben ist.

Eine sichere Befestigung des Türaußenblechs an der Schachtverstärkung ist nach zumindest einem der Ansprüche 5 bis 7 möglich, wobei mit den zusätzlichen Befestigungslaschen das Türaußenblech an der Schachtverstärkung gehalten ist, zumindest bis der Klebstoff ausgehärtet ist.

Gemäß einer in Anspruch 9 angegebenen Ausführungsform wird das Türinnenteil mit der Schachtverstärkung versteift.

Für ein ansprechendes Karosserie-Styling kann - wie Anspruch 10 beschreibt - die Schachtverstärkung eine Biegekomponente aufweisen, insbesondere dann, wenn die Schachtverstärkung benachbart unterhalb einer so genannten Gürtellinie der Karosserie liegt und deren Verlauf folgen soll, oder - wie in Anspruch 11 angegeben - das Türaußenblech einen entsprechenden Verlauf bzw. eine Biegung aufweist, wenn sich beispielsweise der Querschnitt des Türkörpers ändert.

Die Erfindung wird nachfolgend anhand eines Ausführungsbeispiels mit Bezug auf die Zeichnung näher erläutert. Es zeigen:
- Fig. 1: in einer Perspektive ein Kraftfahrzeug mit einer Kraftfahrzeugtür,
- Fig. 2: die Kraftfahrzeugtür nach Fig. 1 im Rohbauzustand,
- Fig. 3: eine Schachtverstärkung der Kraftfahrzeugtür nach Fig. 2
- Fi. 4: vergrößert einen Schnitt der Kraftfahrzeugtür entlang der Linie IV - IV in Fig. 2,
- Fig. 5: vergrößert einen Schnitt der Kraftfahrzeugtür entlang der Linie V - V in Fig. 1 und
- Fig. 6: stark vergrößert die Einzelheit X aus Fig. 5.

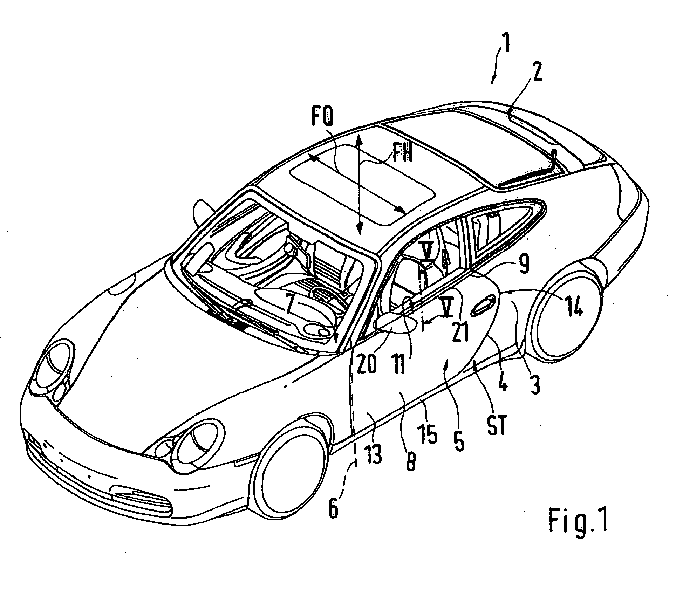

Fig. 1 zeigt in an sich bekannter Bauart ein Kraftfahrzeug 1 mit einem Aufbau 2, der eine Karosserie 3 besitzt. In üblicher Weise ist in eine Karosserieöffnung 4 eine Kraftfahrzeugtür 5 so eingesetzt, dass sie von einer gezeigten Schließstellung ST um eine Scharnierachse 6 in eine nicht dargestellt Offenstellung geschwenkt werden kann. Dabei ist die Scharnierachse 6 beispielsweise benachbart einer so genannten A - Säule 7 angeordnet. Bei der Kraftfahrzeugtür 5 des Ausführungsbeispiels handelt es sich demnach um eine seitliche Tür des Kraftfahrzeugs 1.

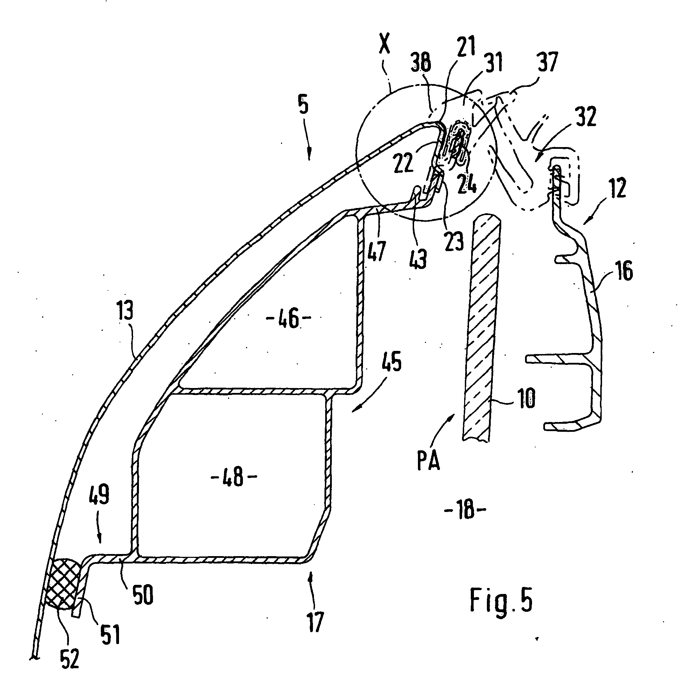

Die im Folgenden lediglich als Tür 5 bezeichnete Kraftfahrzeugtür besitzt einen Türkörper 8, der unterhalb einer Gürtellinie 9 der Karosserie 3 liegt. Die Tür 5 weist ferner eine Fensterscheibe 10 auf, die lediglich in Fig. 5 in einer abgesenkt Position PA zu sehen ist; in der sie innerhalb des Türkörpers 8 versenkt ist. In ihrer angehobenen Schließposition (nicht gezeigt) ragt sie aus einer Schachtöffnung 11 des Türkörpers 8 heraus. Die Schachtöffnung 11 liegt in der Gürtellinie 9 und folgt damit deren Verlauf, der aus Fig. 1 ersichtlich ist. Die Gürtellinie 9 kann im Bereich der Tür 5 bogenförmig, ansteigend und/oder abfallend in zumindest einer Fahrzeugquerrichtung FQ und/oder Fahrzeughochrichtung FH verlaufen.

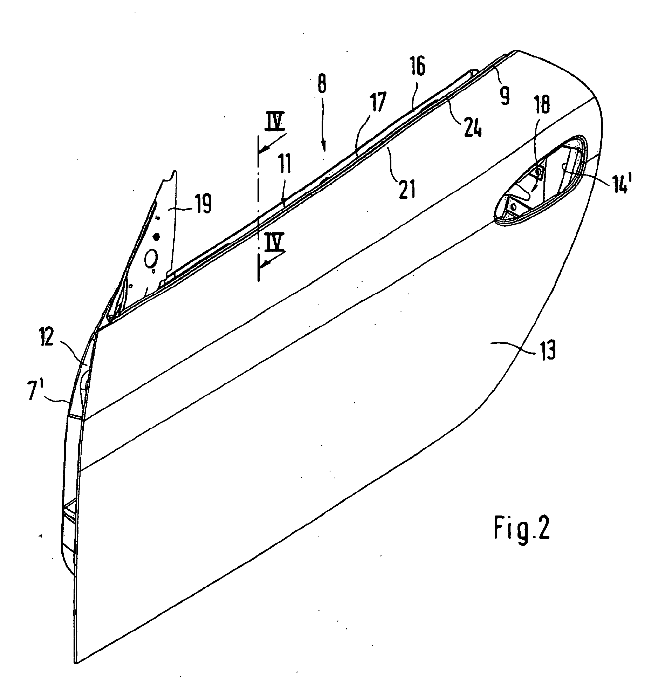

Die Tür 5 ist zusammengesetzt zumindest aus einem Türinnenteil 12 (Fig. 2) und einem randseitig damit verbundenen Türaußenblech 13, wobei das Türinnenteil 12 rahmenartig umlaufend ausgebildet sein kann, also einen ersten aufrechten Rahmenschenkel 7' benachbart zur A - Säule 7, einen zweiten aufrechten Rahmenschenkel 14' benachbart zu einer B - Säule 14 (Fig. 1), einen benachbart zu einem Schweller 15 verlaufenden unteren Rahmenschenkel (nicht dargestellt) und schließlich einen benachbart zu der Gürtellinie 9 verlaufenden oberen Rahmenschenkel 16 (Fig. 5) aufweisen kann. Etwa parallel jedoch mit Abstand zum Rahmenschenkel 16 ist an dem Türinnenteil 12 eine Schachtverstärkung 17 angeordnet, die unterhalb der Schachtöffnung 11 und benachbart zum Türaußenblech 13 angeordnet ist. Türinnenteil 12 und Türaußenblech 13 umgeben so einen Fensterschacht 18, der nach oben durch die Schachtöffnung 11 geöffnet ist, so dass die Fensterscheibe 10 in ihn hinein absenkbar ist. Die Schachtöffnung 11 kann demnach seitlich begrenzt werden von der Schachtverstärkung 17 einerseits und von dem Rahmenschenkel 16 andererseits. Das Türinnenteil 12 kann noch mit einem so genannten Spiegeldreieck 19 ausgestattet sein, das der Befestigung einen Außenrückblickspiegels 20 dient und das den Rahmenschenkel 16 und die Gürtellinie 9 überragt.

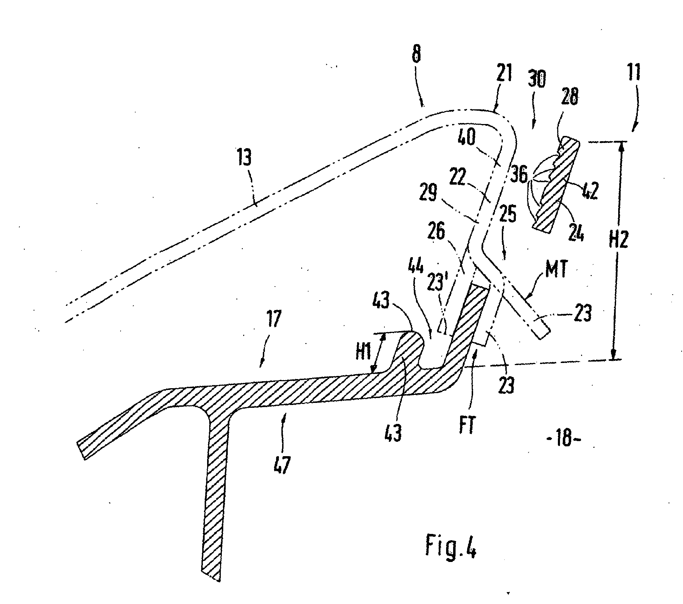

Wie Fig. 4 zeigt, weist das Türaußenblech 13 an seinem oberen, der Schachtöffnung 11 zugekehrten Rand 21 einen nach unten abgebogenen Flansch 22 auf, der mit seinem freien Ende 23' mit der Schachtverstärkung 17 wie folgt verbunden ist. Von dem geraden, jedoch unter einem Winkel zu einer gedachten Horizontalen und nach unten gerichteten Flansch 22 gehen ein oder mehrere Befestigungslaschen 23 aus, die zur Schachtöffnung 11 hin von dem Flansch 22 abgebogen sind. In Fig. 4 ist eine Montagestellung MT der Befestigungslasche 23 und eine fertige End - bzw. Fixierstellung FT gezeigt. In einen aufrechten, von der Schachtverstärkung 17 nach oben entspringenden ersten Längssteg 24 sind entsprechend der Anzahl der Befestigungslaschen 23 ein oder mehrere Öffnungen 25 eingebracht, in die die Befestigungslaschen 23 eingesteckt werden, wenn diese in der Montagestellung MT vorliegen. Das Türaußenblech 13 kann mithin mit seinen Befestigungslaschen 23 an der Schachtverstärkung 17 eingehängt werden; anschließend werden die Befestigungslaschen 23 in Richtung Längssteg 24 gebogen, vorzugsweise bis sie daran anliegen, wie dies durch die Fixierstellung FT verdeutlicht ist. Der Längssteg 24 wird somit zwischen den Befestigungslaschen 23 und dem übrigen, das Ende 23' aufweisenden Endabschnitt 26 des Flansches 22 aufgenommen. Zusätzlich kann zwischen dem Flansch 22 und dem Längssteg 24 eine Klebung KB vorgesehen sein, auf die weiter unten näher eingegangen wird.

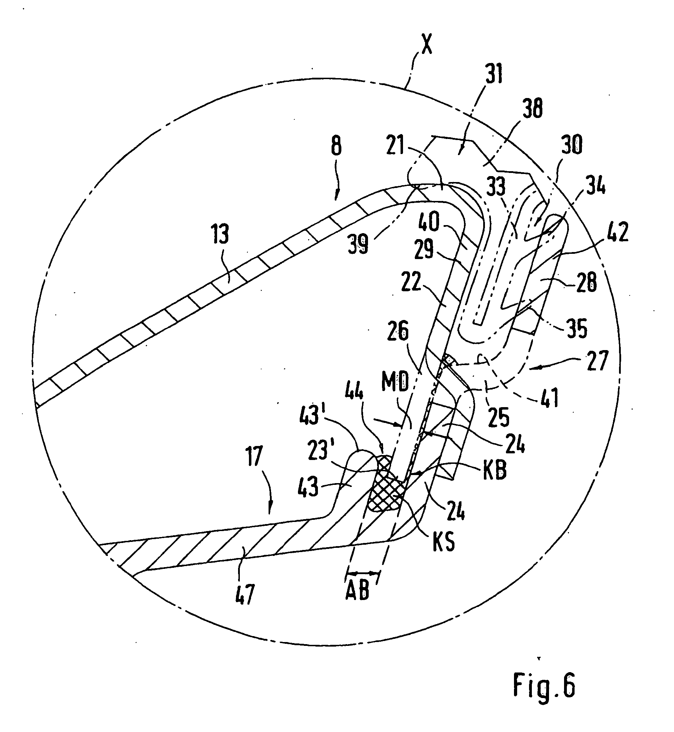

Der aufrechte erste Längssteg 24 weist in seinem Verlauf eine Stufe bzw. einen Absatz 27 auf, was deutlich in Fig. 6 zu sehen ist. In diesen schrägen bzw. bogenförmigen in Richtung Rahmenschenkel 16 sich erstreckenden Absatz 27 sind die Öffnungen 25 für die Befestigungslaschen 23 eingebracht, so dass ein oberhalb des Absatzes 27 angeordneter wieder aufrechter Stegabschnitt 28 des Längssteges 24, ein oberhalb der Befestigungslaschen 23 angeordneter Flanschabschnitt 29 des Flansches 22 und der Absatz 27 eine nach oben offenen Befestigungsnut 30 definieren, d.h. seitlich und unten begrenzen. In die U- oder V-förmige Befestigungsnut 30 ist eine äußere, der Schachtöffnung 11 und dem Türaußenblech 13 zugeordnete Fensterdichtung 31 eingesetzt. Eine innere Fensterdichtung 32 für die Schachtöffnung 11 kann an dem Rahmenschenkel 16 befestigt sein. Die äußere Fensterdichtung 31 weist einen Einsteck- bzw. Befestigungsabschnitt 33 auf, der innerhalb der Befestigungsnut 30 klemmend und/oder rastend oder dgl. gehalten ist. Von dem Befestigungsabschnitt 33 kann zumindest eine innerhalb der Befestigungsnut 30 liegende Dichtlippe 34 bzw. 35 ausgehen, die mit dem Längssteg 24 dichtend zusammenwirkt. An dem Längssteg 24 können entsprechend ein oder mehrere Dichtkerben 36 ausgebildet sein, in denen das freie Ende der Dichtlippe 34 bzw. 35 zu liegen kommt, je nach dem, wie weit der Befestigungsabschnitt 3 in die Befestigungsnut 30 hineinragt. Ferner geht von dem Befestigungsabschnitt 33 noch zumindest eine nach oben gerichtete Scheibendichtlippe 37 aus, die mit der Fensterscheibe 9 zusammenwirkt. Überdies ist an dem Befestigungsabschnitt 33 noch ein Außenfortsatz 38 ausgebildet, der sich über den Rand 21 des Türaußenblechs 13 hinweg erstreckt und mit einem Dichtwulst 39 auf dem Außenblech 13 aufliegt.

Die Befestigungsnut 30 wird - wie erwähnt - gebildet von dem Flanschabschnitt 29, an den sich der Endabschnitt 26 anschließt, der fest mit der Schachtverstärkung 17 durch die Klebung KB verbunden ist. Der übrige Abschnitt des Flansches 22, also der Flanschabschnitt 29 hingegen ist als frei stehende Wand 40 der Nut 30 ausgeführt, die also seitlich nicht abgestützt ist, sondern lediglich mit ihrem unteren Ende 23' bzw. dem Endabschnitt 26 mit der Schachtverstärkung 17 fest verbunden ist und die die Befestigungsnut 30 seitlich begrenzt. Zwischen dem Rand 21 und dem Endabschnitt 26 steht die Wand 40 unabgestützt frei. Ein Nutgrund 41 der Befestigungsnut 30 wird von dem Absatz 27 und eine andere seitliche Wand 42 von dem Längssteg 24, insbesondere von dessen Stegabschnitt 28, gebildet.

Mit seitlichem Abstand AB, also in Richtung Türaußenblech 13 versetzt, ist ein zweiter aufrechter Längssteg 43 an der Schachtverstärkung 17 ausgebildet, der somit zwischen Flansch 22 und Türaußenblech 13 aufrecht steht und der allerdings eine wesentlich geringere Höhe H1 als der erste Längssteg 24 (Höhe H2) aufweist. Insbesondere ist die Höhe H1 so bemessen, dass der zweite Längssteg 43 mit seinem oberen Ende 43' nicht bis zu dem Absatz 27 bzw. den Öffnungen 25 heran reicht. Außerdem ist der seitliche Abstand AB zwischen den Stegen 24 und 43 deutlich größer als die Materialdicke MD des Flansches 22. Es wird so durch zumindest die beiden Stege 24 und 43 zumindest abschnittweise ein Längskanal 44 gebildet, der dem Auffangen von überschüssigem Klebstoff KS der Klebung KB dient. Der Querschnitt des Längskanals 44 kann U- oder V-förmig sein. Die Breite des Längskanals 44 ist identisch mit dem seitlichen Abstand AB.

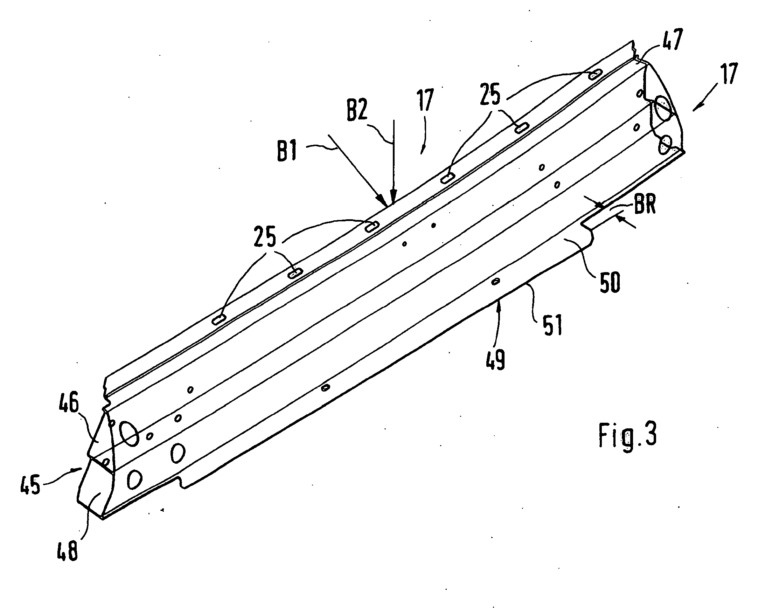

Die Schachtverstärkung 17 ist vorzugsweise einstückig als Strangpresshohlprofil ausgeführt. Dieses weist als Grundkörper beispielsweise ein Ein- oder Zweikammerprofil 45, ggf. auch ein Mehrkammerprofil, auf wobei von einem oberen Kammerprofil 46 über einen flach ansteigenden oder etwa waagerechten Verbindungssteg 47 der erste und zweite Längssteg 24 und 43 mit dem Grundkörper verbunden sind. Von einem unteren Kammerprofil 48 geht seitlich noch ein Abstützsteg 49 aus, der - im Querschnitt gesehen - als Winkelsteg mit einem liegenden Schenkel 50 und einem aufrechten Schenkel 51 ausgestattet ist. Der aufrechte Schenkel 51 dient der Abstützung des Außenblechs 13. Er weist dafür ein elastisches Abstützelement 52, insbesondere eine so genannte Quellschaumdichtung, auf. Wie aus Fig. 3 ersichtlich, ändert sich die Breite BR des seitlich wegragenden Schenkels 50 über der Länge der Schachtverstärkung 17. Der Abstützsteg 49 kann so dem Verlauf des Außenblechs 13 angepasst sein.

Aus Fig. 3 lässt sich ferner erkennen, dass die Schachtverstärkung 17 gebogen, ansteigend und/oder abfallend verläuft, wie dies bereits vorstehend im Zusammenhang mit dem Verlauf der Gürtellinie 9 beschrieben ist. Die Schachtverstärkung 17 weist mithin zumindest eine erste Biegekomponente B1 in Fahrzeugquerrichtung FQ auf, da sich der Querschnitt des Türkörpers 8 in Fahrzeugquerrichtung FQ gesehen - ausgehend von der A- Säule 7 in Richtung B - Säule 14 - ändert und/oder an Tiefe zu- oder abnimmt und/oder bauchig ausgeführt ist und/oder die Gürtellinie 9 gekrümmt verläuft. Eine zusätzliche oder alternative zweite Biegekomponente B2 ist in Fahrzeughochrichtung FH für die Schachtverstärkung 17 vorgesehen, da sich der Querschnitt des Türkörpers 8 in Fahrzeugquerrichtung FQ gesehen - ausgehend von der A- Säule 7 in Richtung B - Säule 14 - ändert und/oder an Höhe zu- oder abnimmt und/oder bauchig ausgeführt ist und/oder die Gürtellinie 9 gekrümmt verläuft, wobei beispielsweise die Gürtellinie 9 - ausgehend von der A- Säule 7 in Richtung B - Säule 14 - ansteigt oder abfällt. Die Pfeile der Biegekomponenten B1 und B2 sind in gleicher Weise wie ein Pfeil für eine Angabe eines Radius' eingezeichnet.

## Patentansprüche

1. Kraftfahrzeugtür (5) mit einem zumindest aus einem Türinnenteil (12) und einem daran befestigten Türaußenblech (13) gebildeten Türkörper (8), der nach oben hin eine Schachtöffnung (11) für einen innerhalb des Türkörpers (8) liegenden Fensterschacht (18) aufweist, einer an dem Türinnenteil (12) befestigten und unterhalb der Schachtöffnung (11) verlaufenden Schachtverstärkung (17), an der das Türaußenblech (13) mit seinem oberen, benachbart zur Schachtöffnung liegenden und nach unten abgebogenen Flansch (22) gehalten ist, und mit einer der Schachtöffnung (11) zugeordneten Fensterdichtung 31), die in einer zumindest von einem ersten aufrechten Längssteg (24) der Schachtverstärkung (17) gebildeten Befestigungsnut (30) aufgenommen ist, **dadurch gekennzeichnet, dass** der nach unten abgebogene Flansch (22) des Türaußenblechs (13) als eine frei stehende Wand (40) ausgeführt ist, die lediglich mit ihrem unteren Endabschnitt (26) fest mit der Schachtverstärkung (17) verbunden ist, und dass die frei stehende Wand (40) zusammen mit dem ersten Längssteg (24) die Befestigungsnut (30) seitlich begrenzt.

2. Kraftfahrzeugtür nach Anspruch 1, **dadurch gekennzeichnet, dass** der Längssteg (24) mit einem Absatz (27) versehen ist, der einen Nutgrund (41) der Befestigungsnut (30) bildet.

3. Kraftfahrzeugtür nach Anspruch 1, **dadurch gekennzeichnet, dass** von der Schachtverstärkung (17) zumindest abschnittweise ein zweiter aufrechter Längssteg (43) ausgeht, der zwischen dem Flansch (22) und dem Türaußenblech (13) angeordnet ist, so dass zumindest abschnittweise ein Längskanal (44) mit dem ersten Längssteg (24) gebildet ist, dass der zweite Längssteg (43) eine wesentlich geringere Höhe (H1) als der erste Längssteg (22) aufweist, und dass der Flansch (22) des Türaußenblechs (13) zumindest mit dem ersten Längssteg (24) der Schachtverstärkung (17) verklebt ist, wofür ein vorzugsweise unter Wärme aushärtender Klebstoff (KS) verwendet wird.

4. Kraftfahrzeugtür nach Anspruch 3, **dadurch gekennzeichnet, dass** der Längskanal (44) eine Breite (Abstand AB) aufweist, die wesentlich größer als die Materialdicke (MD) des Flansches (22) des Türaußenblechs (13) ist.

5. Kraftfahrzeugtür nach Anspruch 1, **dadurch gekennzeichnet, dass** von dem Flansch (22) des Türaußenblechs (13) Befestigungslaschen (23) ausgehen, die an dem ersten Längssteg (24) ausgebildete Öffnungen (25) durchgreifen.

6. Kraftfahrzeugtür nach Anspruch 2 und 5, **dadurch gekennzeichnet, dass** die Öffnungen (25) an dem Absatz (27) des ersten Längsstegs (24) ausgebildet sind.

7. Kraftfahrzeugtür nach Anspruch 5, **dadurch gekennzeichnet, dass** die Befestigungslaschen (23) in einer abgebogenen Montagestellung (MT) in die Öffnungen (25) eingesetzt und anschließend in eine Fixierstellung (FT) gebogen werden.

8. Kraftfahrzeugtür nach Anspruch 1, **dadurch gekennzeichnet, dass** die Schachtverstärkung (17) als Strangpresshohlprofil ausgeführt ist.

9. Kraftfahrzeugtür nach Anspruch 1 oder 8, **dadurch gekennzeichnet, dass** die Schachtverstärkung (17) benachbart zu einem oberen Rahmenschenkel (16) des Türinnenteils (12) angeordnet ist.

10. Kraftfahrzeugtür nach Anspruch 9, **dadurch gekennzeichnet, dass** die Schachtverstärkung (17) gebogen ausgeführt ist und eine Biegekomponente (B1, B2) in Fahrzeugquerrichtung (FQ) und/oder in Fahrzeughochrichtung (FH) aufweist.

11. Kraftfahrzeugtür nach einem der vorhergehenden Ansprüche, **dadurch gekennzeichnet, dass** von der Schachtverstärkung (17) ein sich in Richtung Türaußenblech (13) erstreckender Abstützsteg (49) für das Türaußenblech (13) ausgeht, dessen Querschnittsprofil an den Verlauf des Türaußenblechs (13) angepasst ist.

## Claims

1. Motor vehicle door (5) with a door body (8) which is formed at least from a door inner part (12) and a door outer panel (13) fastened thereto and comprises toward the top a shaft opening (11) for a window shaft (18) located inside the door body (8), with a shaft reinforcement (17) which is fastened to the door inner part (12) and extends below the shaft opening (11) and on which the door outer panel (13) is supported with its upper flange (22) which lies adjacent to the shaft opening and is bent off downwardly, and with a window seal (31) which is assigned to the shaft opening (11) and is received in a fastening groove (30) formed at least by a first upright longitudinal web (24) of the shaft reinforcement (17), **characterized in that** the downwardly bent-off flange (22) of the door outer panel (13) is made in the form of a free-standing wall (40) which is connected firmly to the shaft reinforcement (17) only with its lower end portion (26), and **in that** the free-standing wall (40) delimits the fastening groove (30) laterally together with the first longitudinal web (24).

2. Motor vehicle door according to Claim 1,
**characterized in that** the longitudinal web (24) is provided with a shoulder (27) which forms a groove bottom (41) of the fastening groove (30).

3. Motor vehicle door according to Claim 1, **characterized in that** a second upright longitudinal web (43), which is arranged between the flange (22) and the door outer panel (13), extends at least in portions from the shaft reinforcement (17), so that a longitudinal channel (44) is formed at least in portions with the first longitudinal web (24), **in that** the second longitudinal web (43) has a considerably smaller height (H1) than the first longitudinal web (24), and **in that** the flange (22) of the door outer panel (13) is bonded at least to the first longitudinal web (24) of the shaft reinforcement (17), for which purpose use is preferably made of an adhesive (KS) which sets under heat action.

4. Motor vehicle door according to Claim 3, **characterized in that** the longitudinal channel (44) has a width (distance AB) which is considerably greater than the material thickness (MD) of the flange (22) of the door outer panel (13).

5. Motor vehicle door according to Claim 1, **characterized in that** fastening lugs (23), which extend through openings (25) formed in the first longitudinal web (24), extend from the flange (22) of the door outer panel (13).

6. Motor vehicle door according to Claims 2 and 5, **characterized in that** the openings (25) are formed in the shoulder (27) of the first longitudinal web (24).

7. Motor vehicle door according to Claim 5, **characterized in that** the fastening lugs (23) are inserted into the openings (25) in a bent-off mounting position (MT) and are then bent into a fixing position (FT).

8. Motor vehicle door according to Claim 1, **characterized in that** the shaft reinforcement (17) is made in the form of an extruded hollow profile.

9. Motor vehicle door according to Claim 1 or 8, **characterized in that** the shaft reinforcement (17) is arranged adjacent to an upper frame leg (16) of the door inner part (12).

10. Motor vehicle door according to Claim 9, **characterized in that** the shaft reinforcement (17) is of curved design and has a curving component (B1, B2) in the transverse direction (FQ) of the vehicle and/or in the vertical direction (FH) of the vehicle.

11. Motor vehicle door according to one of the preceding claims, **characterized in that** a supporting web (49) for the door outer panel (13), which extends in the direction of the door outer panel (13) and the cross-sectional profile of which is adapted to the shape of the door outer panel (13), extends from the shaft reinforcement (17).

## Revendications

1. Portière de véhicule (5) comprenant un corps de portière (8) formé au moins d'une partie intérieure de portière (12) et d'une tôle extérieure de portière (13) fixée sur elle, le corps de portière présente vers le haut une ouverture de puits (11) pour un puits de vitre (18) situé à l'intérieur du corps de portière (8), un renfort de puits (17) fixé à la partie intérieure de portière (12) et s'étendant sous l'ouverture de puits (11), sur lequel renfort est maintenue la tôle extérieure de portière (13) par sa bride supérieure (22), située à côté de l'ouverture de puits et recourbée vers le bas, et avec un joint d'étanchéité de vitre (31) associé à l'ouverture de puits (11), qui est reçu dans une rainure de fixation (30) formée au moins par une première nervure longitudinale droite (24) du renfort de puits (17), **caractérisée en ce que** la bride (22) recourbée vers le bas de la tôle extérieure de portière (13) est réalisée sous forme de paroi autoportante (40), qui est connectée fixement uniquement par sa portion d'extrémité inférieure (26) au renfort de puits (17), et **en ce que** la paroi autoportante (40) délimite latéralement la rainure de fixation (30), conjointement avec la première nervure longitudinale (24).

2. Portière de véhicule selon la revendication 1, **caractérisée en ce que** la nervure longitudinale (24) est pourvue d'un déport (27) qui forme une base de rainure (41) de la rainure de fixation (30) .

3. Portière de véhicule selon la revendication 1, **caractérisée en ce que,** depuis le renfort de puits (17) s'étend, au moins en partie, une deuxième nervure longitudinale droite (43), qui est disposée entre la bride (22) et la tôle extérieure de portière (13), de sorte qu'au moins en partie, un canal longitudinal (44) soit formé avec la première nervure longitudinale (24), **en ce que** la deuxième nervure longitudinale (43) présente une hauteur (H1) sensiblement inférieure à la première nervure longitudinale (24), et **en ce que** la bride (22) de la tôle extérieure de portière (13) est collée au moins à la première nervure longitudinale (24) du renfort de puits (17), ce pour quoi on utilise de préférence un adhésif (KS) thermodurcissable.

4. Portière de véhicule selon la revendication 3, **caractérisée en ce que** le canal longitudinal (44) présente une largeur (distance AB) qui est sensiblement supérieure à l'épaisseur de matériau (MD) de la bride (22) de la tôle extérieure de portière (13).

5. Portière de véhicule selon la revendication 1, **caractérisée en ce que** depuis la bride (22) de la tôle extérieure de portière (13) s'étendent des pattes de fixation (23) qui viennent en prise à travers des ouvertures (25) réalisées sur la première nervure longitudinale (24).

6. Portière de véhicule selon les revendications 2 et 5, **caractérisée en ce que** les ouvertures (25) sont réalisées sur le déport (27) de la première nervure longitudinale (24).

7. Portière de véhicule selon la revendication 5, **caractérisée en ce que** les pattes de fixation (23) sont insérées dans les ouvertures (25) dans une position de montage recourbée (MT) et sont ensuite cintrées dans une position de fixation (FT).

8. Portière de véhicule selon la revendication 1, **caractérisée en ce que** le renfort de puits (17) est réalisé sous forme de profilé creux filé.

9. Portière de véhicule selon la revendication 1 ou 8, **caractérisée en ce que** le renfort de puits (17) est disposé à proximité d'une branche supérieure du cadre (16) de la partie intérieure de portière (12).

10. Portière de véhicule selon la revendication 9, **caractérisée en ce que** le renfort de puits (17) est cintré et présente une composante de flexion (B1, B2) dans la direction transversale du véhicule (FQ) et/ou dans la direction verticale du véhicule (FH).

11. Portière de véhicule selon l'une quelconque des revendications précédentes, **caractérisée en ce que** depuis le renfort de puits (17) s'étend une nervure d'appui (49) pour la tôle extérieure de portière (13) s'étendant dans la direction de la tôle extérieure de portière (13), dont le profil en section transversale est adapté à l'allure de la tôle extérieure de portière (13).
